# EUROPÄISCHE PATENTSCHRIFT

(11) **EP 0 774 391 B1**
(45) Veröffentlichungstag und Bekanntmachung des Hinweises auf die Patenterteilung: **27.06.2001**
(21) Anmeldenummer: 96117624.5
(22) Anmeldetag: 04.11.1996
(51) Int. Cl.: B60T 13/74, B60T 8/32, B60T 8/40, B60T 8/24, B60T 8/48

(54) **Bremsbetätigungseinheit**
Brake actuating unit
Unité d'actionnement de freinage

(30) Priorität: 15.11.1995 DE 19542657
(43) Veröffentlichungstag der Anmeldung: 21.05.1997
(73) Patentinhaber: Lucas Industries Limited, London W1Y 4DJ (GB)
(72) Erfinder: Mohr, Kurt, 56283 Halsenbach/Ehr (DE); Wagner, Thomas, 56179 Vallendar (DE)
(74) Vertreter: Schmidt, Steffen J., Dipl.-Ing.

(56) Entgegenhaltungen:
- EP-A- 0 025 714
- EP-A- 0 092 896
- WO-A-95/19901
- DE-A- 2 208 936
- DE-A- 3 903 532
- DE-A- 4 310 061

## Beschreibung

Die vorliegende Erfindung betrifft eine Bremsbetätigungseinheit mit einer Zylinder/Kolbenanordnung, die auf wenigstens einen Bremsbelag wirkt, der mit einer Bremsscheibe in Reibungseingriff bringbar ist, einer Hydraulikpumpe, die mit einer Druckkammer der Zylinder/Kolbenanordnung hydraulisch verbindbar ist um den Zylinder der Zylinder/Kolbenanordnung relativ zum Kolben der Zylinder/Kolbenanordnung zu bewegen, und einem die Hydraulikpumpe antreibenden Motor.

Aus der EP 286 504 B1 ist eine hydraulische Bremsbetätigungsvorrichtung mit elektrischer Steuerung bekannt, mit einem Körper und einem Bremskolben, der dazu geeignet ist, in dem Körper parallel zu seiner Achse zu gleiten und mit diesem eine Hauptsteuerkammer begrenzt, die über eine Druckleitung mit einer Pumpe verbunden ist. Die Pumpe wird durch eine Abtriebswelle eines elektrischen Motors angetrieben. Die Pumpe steht über eine Einlaßleitung mit einem Bremsflüssigkeits-Behälter in Verbindung. Eine Kreislaufleitung, die durch ein in dem Körper angebrachtes Elektroventil gesteuert ist, verbindet selektiv die Hauptsteuerkammer mit dem Behälter. Der Behälter ist in dem Körper ausgebildet. Der elektrische Motor ist auf diesem Körper befestigt. Die Pumpe hat eine Pumpenkammer mit veränderlichem Volumen, die in dem Körper ausgebildet ist und teilweise durch ein Ende eines Tauchkolbens begrenzt ist, der in dem Körper gelagert ist und dessen entgegengesetztes Ende mit der Abtriebswelle des elektrischen Motors über eine Vorrichtung verbunden ist. Diese Vorrichtung wandelt eine Drehbewegung der Welle in eine Hin- und Herbewegung des Tauchkolbens um. In der Rückleitung in dem Körper ist ein Einlaßventil in der Einlaßleitung sowie ein Auslaßventil angebracht. Die Achse der Abtriebswelle des elektrischen Motors ist senkrecht zu der Achse des Tauchkolbens ausgerichtet. Eine Kurbelwelle ist von der Welle getragen und an dem Körper elastisch abgestützt, um den Tauchkolben dauernd gegen die Kurbelwelle abgestützt zu halten.

Da diese Bremsbetätigungseinheit eine Radialkolbenpumpe hat, die aufgrund von starken Druckpulsationen keine ausreichende Dosierbarkeit ermöglicht, ist diese Anordnung nicht für eine feinfühlige Druckmodulation beispielsweise für eine Antiblokkierregelung geeignet. Auch erfordert diese Bremsbetätigungseinheit ein zusätzliches Elektromagnetventil, um den hydraulischen Druck abzubauen, wodurch sich ein erhöhter Bauteileaufwand ergibt. Nachteilig ist auch, daß die Pumpe mit dem Bremskolben direkt in Verbindung steht.

DE 22 08 936 A offenbart ein Bremssystem für ein Fahrzeug, das an jedem zu bremsenden Rad eine kleine Hydraulikeinheit aufweist, mittels der ein mit einem Radbremszylinder verbundenes Bremsflüssigkeitsvolumen veränderbar ist. Hierzu ist eine Zylinder/Kolbenanordnung oder ein Balg vorgesehen, die bzw. der mit Hilfe eines Motors mit einer Gewindespindel und einer Gewindemutter bewegbar ist. Mit einer solchen Hydraulikeinrichtung ist grundsätzlich ein Absenken, Konstanthalten und Anheben des Bremsdrucks am Radbremszylinder möglich. Die Druckvariation ist jedoch aufgrund der verhältnismäßig großen Fläche des Kolbens bzw. Balges und des daher geringen Verstellweges ungenau.

Demgegenüber liegt der Erfindung die Aufgabe zugrunde, eine verbesserte Bremsbetätigungseinrichtung bereitzustellen, die für den Einsatz einer Antischlupfregelung, einer Fahrdynamikregelung, einer Abstandsregelung, einer Berganfahrregelung oder einer Antiblockierregelung geeignet ist.

Zur Lösung dieser Aufgabe ist die Hydraulikpumpe eine Axialkolbenpumpe, die in eine Druckaufbau-, Druckhalte- und Druckabbaustellung bringbar ist.

Weitere Merkmale und Ausgestaltungen sind Gegenstand von Unteransprüchen.

### Beschreibung der Zeichnungen

Die Erfindung wird anhand von Zeichnungen erläutert. Dazu zeigen:
- Fig. 1: eine Ausführungsform einer erfindungsgemäßen elektrisch gesteuerten Bremsbetätigungseinheit,
- Fig. 2: schematisch ein besonders vorteilhaftes Bremssystem, in dem eine erfindungsgemäße elektrisch gesteuerte Bremsbetätigungseinheit für eine Achse eines Fahrzeugs eingesetzt ist, und
- Fig. 3a bis 3c: schematisch Aufbau und Funktionsweise einer besonders vorteilhaften Ausführungsform einer Pumpe für eine erfindungsgemäße elektrisch gesteuerte Bremsbetätigungseinheit.

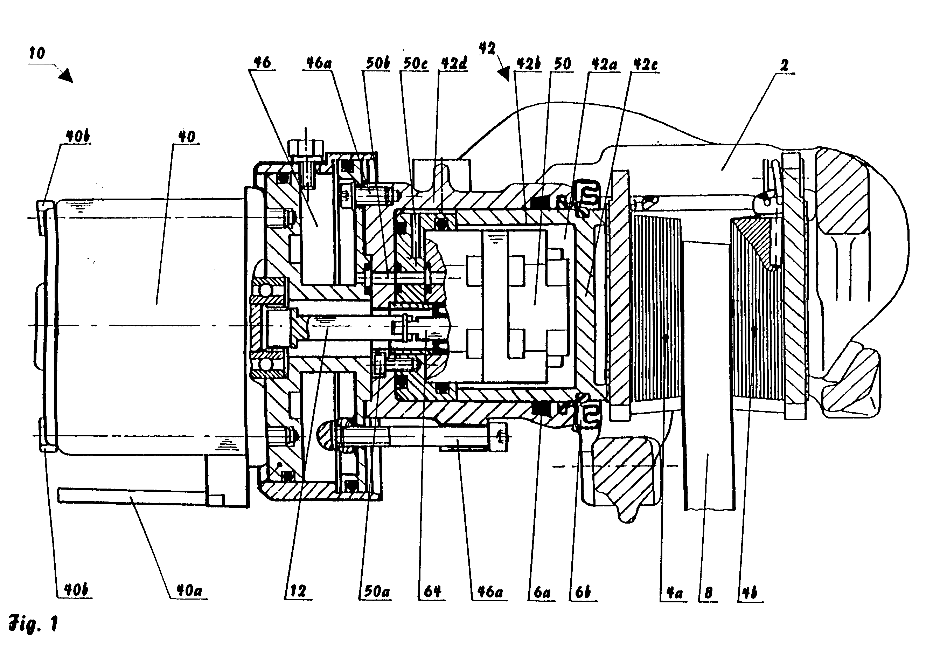

In Fig. 1 ist eine erfindungsgemäße elektrisch gesteuerte Bremsbetätigungseinheit 10 dargestellt. Die Bremsbetätigungseinheit 10 weist eine Kolben-/Zylinderanordnung 42 auf, die durch einen Bremszylinder 42b gebildet ist, in dem ein Bremskolben 42c axial gleitend aufgenommen ist. Der Bremskolben 42c wirkt auf einen ersten Bremsblock 4a, der zusammen mit einem zweiten Bremsblock 4b auf zwei gegenüberliegende Flächen einer Bremsscheibe 8 einwirkt. Eine Radbremszange 2, die einstückig mit dem Bremszylinder 42b verbunden ist, übergreift die Bremsscheibe 8 und haltert den ersten und zweiten Bremsblock 4a, 4b.

Die hydraulische Abdichtung des Bremskolbens 42c zu dem Bremszylinder 42b erfolgt durch eine Dichtung 6a, die in einer kegelstumpfförmig umlaufenden Nut des Bremszylinders 42b angeordnet ist. Die Dichtung 6a dient auch zur Rückstellung des Bremskolbens 42c, um ein Schleifen der Bremsblöcke 4a, 4b an der Bremsscheibe 8 bei unbetätigter Bremsbetätigungseinheit 10 zu vermeiden. Dieser Rückstellvorgang wird auch als "Rollback" bezeichnet. Weiterhin ist eine Dichtung 6b zur Abdichtung der Zylinder-/Kolbenanordnung 42 gegen Staub und Feuchtigkeit vorgesehen.

Zur Modulation des Bremsdruckes in einer Druckkammer 42a ist eine Pumpe 50 auf dem Grund des Bremszylinders 42b mittels Befestigungselementen 50a montiert. Die Pumpe 50 ist von einem Elektromotor 40 angetrieben. Dazu ist eine Antriebswelle 64 der Pumpe 50 über ein Kupplungselement 12 mit dem Elektromotor 40 getrieblich gekoppelt. Die elektrische Steuerung des Elektromotors 40 erfolgt über eine elektrische Anschlußleitung 40a durch eine (nicht dargestellte) elektronische Steuereinheit.

Zwischen dem Elektromotor 40 und dem Bremszylinder 42b ist ein Bremsfluidbehälter 46 angeordnet, der das Kupplungselement 12 radial umgibt. Der Bremsfluidbehälter 46 ist mittels Verbindungselementen 46a an einem Gehäuse 42d der Zylinder/Kolbenanordnung 42 befestigt, während der Elektromotor 40 durch Verbindungsmittel 40b an dem Bremsfluidbehälter 46 befestigt ist. Es ist aber auch möglich den Elektromotor 40 direkt an dem Gehäuse 42d der Zylinder-/Kolbenanordnung 42 zu befestigen und den Bremsfluidbehälter 46 derart anzubringen, daß er den Elektromotor 40 radial umgibt, um auf diese Weise Einbauraum einzusparen.

Über einen ersten Kanal 50b ist die Pumpe 50 mit dem Bremsfluidbehälter 46 und über einen zweiten Kanal 50c mit der Druckkammer 42a verbunden. Zur Modulation des Bremsdruckes ist die Pumpe 50 zwischen zwei Förderrichtungen umschaltbar, was durch Umkehrung der Drehrichtung des Elektromotors 40 erfolgt. Um den Bremsdruck in der Druckkammer 42a zu erhöhen wird die Pumpe 50 in der einen Richtung betrieben, so daß Bremsfluid aus dem Bremsfluidbehälter 46 über den ersten Kanal 50b angesaugt und über den zweiten Kanal 50c in die Druckkammer 42a gefördert wird. Um den Bremsdruck in der Druckkammer 42a zu erniedrigen wird die Pumpe 50 in der anderen Richtung betrieben, so daß Bremsfluid aus der Druckkammer 42a über den zweiten Kanal 50c angesaugt und über den ersten Kanal 50b in den Bremsfluidbehälter 46 zurückgefördert wird.

Die Pumpe 50 ist so in der Druckkammer 42a angeordnet, daß sie mit dem Bremskolben 42c nicht in Berührung steht. Dadurch werden die mechanischen Eigenschaften der Bremse, insbesondere der "Rollback", beispielsweise durch auf den Bremskolben 42c wirkende zusätzliche Reibungskräfte, nicht nachteilig beeinträchtigt.

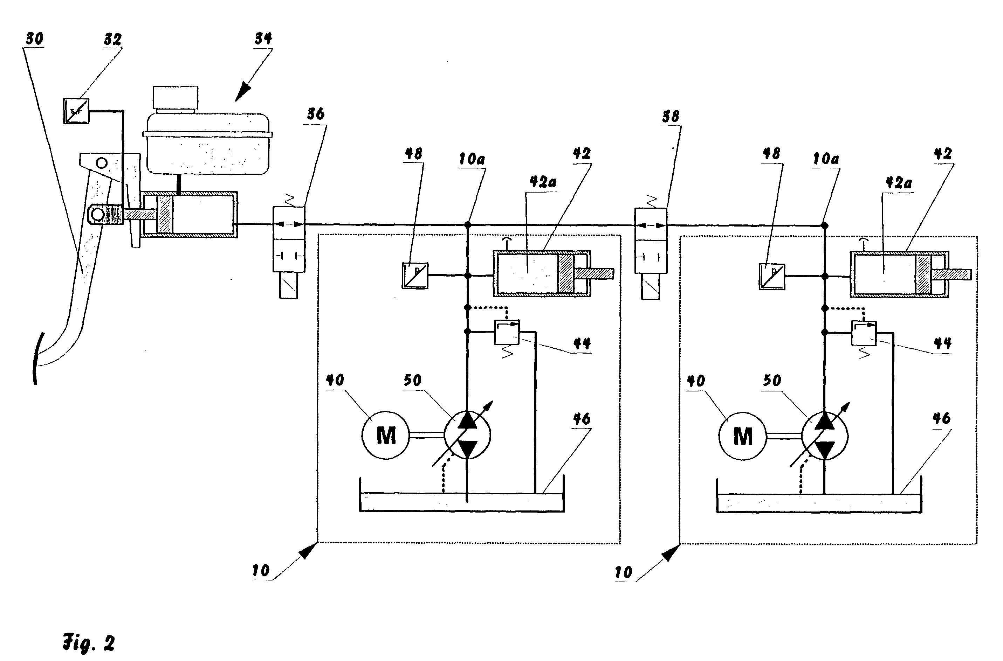

Die Funktionsweise der erfindungsgemäßen elektrisch gesteuerten Bremsbetätigungseinheit 10 wird im folgenden anhand eines Bremssystems näher erläutert. Dazu ist in Fig. 2 ein besonders vorteilhaftes Bremssystem schematisch dargestellt, das sich unter Verwendung der erfindungsgemäßen elektrisch gesteuerten Bremsbetätigungseinheit für die Radbremsen einer Achse eines Fahrzeugs ergibt.

Die elektrisch gesteuerte Bremsbetätigungseinheit 10 weist eine durch einen Elektromotor 40 angetriebene Pumpe 50 zur Betätigung einer Kolben-/Zylinderanordnung 42 auf. Die Pumpe 50 ist mit einem Bremsfluidbehälter 46 verbunden. Weiterhin ist ein Druckbegrenzungsventil 44 parallel zu der Pumpe 50 angeordnet, das bei Überschreitung eines vorbestimmten Druckes in der Druckkammer 42a der Kolben-/Zylinderanordnung 42 das überschüssige Bremsfluid direkt in den Bremsfluidbehälter 46 abläßt.

Bei dem Bremssystem handelt es sich um ein sogenanntes "Brake-by-Wire"-System. Das bedeutet, daß eine mit einer Betätigung des Bremspedals 30 durch den Fahrer in Beziehung stehende Größe (beispielsweise Pedalweg, Pedalkraft oder Pedalbetätigungsgeschwindigkeit) mittels einer Sensoranordnung 32 erfaßt wird. Die Sensoranordnung 32 gibt an eine (nicht dargestellte) elektronische Steuerung ein entsprechendes Eingangssignal zur Auswertung, um elektrische Ansteuersignale für die Bremsbetätigungseinheiten 10 bereitzustellen. Damit sind Normalbremsungen und Antiblockierregelungen durchführbar. Ein solches Bremssystem bietet auch die Möglichkeit die Betätigungseinheiten 10 automatisch, also unabhängig von einer Betätigung des Bremspedals 30 anzusteuern, so daß unter anderem auch Antriebsschlupfregelung, Fahrdynamikregelung, Abstandsregelung sowie Berganfahrregelung möglich sind.

Die Umsetzung der von der (nicht dargestellten) elektronischen Steuerung zur Bremsdruckmodulation bereitgestellten elektrischen Ansteuersignale erfolgt in der Bremsbetätigungseinrichtung 10 durch den die Pumpe 50 antreibenden Elektromotor 40. Der Elektromotor 40 ist in seiner Drehrichtung umkehrbar, wodurch die Pumpe 50 in zwei Förderrichtungen verstellbar ist. In der ersten Förderrichtung fördert die Pumpe 50 Bremsfluid aus dem Behälter 46 in die Druckkammer 42a der Zylinder-/Kolbenanordnung 42, um Bremsdruck aufzubauen. In der zweiten Förderrichtung fördert die Pumpe 50 aus der Druckkammer 42a der Kolben/Zylinderanordnung 42 in den Bremsfluidbehälter 46 zurück, so daß Bremsdruck abgebaut wird.

Ein quasi konstanter Bremsdruck in der Druckkammer 42a der Zylinder-/Kolbenanordnung 42 kann durch eine definierte zeitliche Abfolge von Druckaufbau- und Druckabbauphasen eingestellt werden. Um einen Bremsdruck in der Druckkammer 42a der Kolben/Zylinderanordnung 42 tatsächlich konstant zu halten, besteht unter anderem die Möglichkeit durch ein zusätzliches Elektromagnetventil die Druckkammer 42a der Kolben-/Zylinderanordnung 42 für die Dauer der Druckabbauphasen von der Pumpe 50 abzutrennen. Dabei kann die Pumpe 50 für die Dauer der Druckabbauphase abgeschaltet werden, so daß elektrische Energie eingespart wird. Dies erweist sich insbesondere bei lang andauernden Druckabbauphasen als vorteilhaft, die beispielsweise bei konstanter Verzögerung des Fahrzeugs bei Bergabfahrten auftreten. Um ein zusätzliches Elektromagnetventil und vor allem die erforderliche Ansteuerelektronik einzusparen, ist die Verwendung einer mechanisch selbstsperrend ausgelegten Pumpe 50 von Vorteil, die bei ausgeschaltetem Elektromotor 40 die Druckkammer 42a der Kolben-/Zylinderanordnung 42 von der Pumpe 50 trennt, um den Bremsdruck konstant zu halten.

Bei den von der (nicht dargestellten) elektronischen Steuerung an den Elektromotor 40 abgegebenen elektrischen Ansteuersignalen handelt es sich um Strom-, Spannungs- und/oder Pulsweitenmodulationssignale, durch die nicht nur die Drehrichtung umkehrbar, sondern auch die Drehzahl des Elektromotors 40 variierbar ist, so daß nicht nur die Förderrichtung, sondern auch die Fördermenge der Pumpe 50 verstellbar ist. Über die Einstellung der Fördermenge ist der Gradient des Druckaufbaus und Druckabbaus variierbar, so daß sich eine sehr gute Dosierbarkeit für die Ansteuerung der Bremsbetätigungseinheit 10 ergibt. Um die Druckmodulation in einem geschlossenen Regelkreis durchzuführen, ist in der Bremsbetätigungseinheit 10 eine Sensoranordnung 48 vorgesehen, die den in der Druckkammer 42a der Kolben- /Zylinderanordnung 42 tatsächlich anstehenden Druck erfaßt. Weiterhin dient die Erfassung des in der Druckkammer 42a der Kolben-/Zylinderanordnung 42 tatsächlich anstehenden Drucks zur Sicherheitsüberwachung der Bremsbetätigungseinheit 10.

Die oben beschriebene Bremsbetätigungseinheit 10 stellt bereits ein in sich-abgeschlossenes System dar, das im Fahrzeug mit einer Radbremse gekoppelt ist und nur einer elektrischen Ansteuerung durch die (nicht dargestellte) elektronische Steuerung bedarf. Von daher ist der in Fig. 2 angedeutete hydraulische Anschluß 10a für ein "Brake-by-Wire"-System nicht notwendigerweise erforderlich. Jedoch sind durch den hydraulischen Anschluß 10a weitere Zusatzfunktionen zur Erhöhung der Leistungsfähigkeit und der Systemsicherheit möglich, wodurch sich für die erfindungsgemäße Bremsbetätigungseinheit 10 deutliche Vorteile gegenüber einer sogenannten "trockenen" Bremsbetätigungseinrichtung ergeben. Unter einer "trockenen" Bremsbetätigungseinheit ist in diesem Zusammenhang eine solche zu verstehen, bei der ein Elektromotor beispielsweise eine unmittelbar auf eine Radbremse wirkende Spindel antreibt, die also keine hydraulischen Komponenten, insbesondere Bremsfluid, aufweist.

Zum einen besteht durch den hydraulischen Anschluß 10a die Möglichkeit, die Betätigungseinheiten 10 der Radbremsen einer Achse des Fahrzeugs hydraulisch zu koppeln. Dazu ist zwischen den Anschlüssen 10a ein Elektromagnetventil 38 angeordnet, das im elektrisch unbetätigten Zustand die Anschlüsse 10a miteinander verbindet und im elektrisch betätigten Zustand die Anschlüsse 10a gegeneinander sperrt. Sind die Anschlüsse 10a miteinander in Verbindung, so sind die Druckkammern 42a der Kolben/Zylinderanordnungen 42 hydraulisch kurzgeschloßen, wodurch sich in den Druckkammern 42a der Kolben-/Zylinderanordnungen 42 jeweils das gleiche Druckniveau einstellt, so daß Unterschiede im Regelverhalten zwischen den einzelnen Betätigungseinheiten 10, die beispielsweise durch fertigungstechnisch bedingte Toleranzen entstehen können, kompensiert werden. Dies ist insbesondere bei einer Normalbremsung von Vorteil, da sich wie bei einer konventionellen hydraulischen Bremsanlage an den Rädern einer Achse jeweils das gleiche Bremsverhalten ergibt, so daß die Stabilität des Fahrzeuges gewährleistet ist. Ebenso kann bei einer Antiblockierregelung auf einfache Weise an der Hinterachse des Fahrzeuges eine "Select-Low"-Regelung eingestellt werden. Ist dagegen eine individuelle Regelung des Bremsdrucks in den Radbremsen erforderlich, was unter anderem bei Antiblokkierregelung, Antischlupfregelung oder Fahrdynamikregelung der Fall ist, so wird die hydraulische Verbindung zwischen den Druckkammern 42a der Kolben-/Zylinderanordnungen 42 durch elektrische Ansteuerung des Elektromagnetventils 38 getrennt.

Wird eine mechanisch selbstsperrend ausgelegte Pumpe 50 verwendet, um bei ausgeschaltetem Elektromotor 40 ein Druckniveau in der Druckkammer 42a der Kolben-/Zylinderanordnung 42 konstant zu halten, kann aufgrund eines mechanischen oder elektrischen Defektes der Fall eintreten, daß ein in der Druckkammer 42a einer Kolben-/Zylinderanordnung 42 anstehender Bremsdruck nicht mehr abgebaut werden kann. Um einem sicherheitskritischen Fahrzustand entgegenzuwirken, kann in einem solchen Fall über das Elektromagnetventil 38 eine hydraulische Verbindung zu der Pumpe 50 der gegenüberliegenden Betätigungseinheit 10 hergestellt werden, um das Bremsfluid zurückzufördern. Voraussetzung hierzu ist, das der Bremsfluidbehälter 46 eine ausreichende Aufnahmekapazität besitzt. Ebenfalls kann bei geöffnetem Elektromagnetventil 38 über nur eine Pumpe 50 in den Druckkammern 42a beider Kolben-/Zylinderanordnungen 42 gleichermaßen Bremsdruck aufgebaut werden, um zumindest Normalbremsungen auszuführen, vorausgesetzt, daß ein ausreichendes Fluidvolumen zur Verfügung steht.

Zum anderen besteht die Möglichkeit über den hydraulischen Anschluß 10a die Betätigungseinheit 10 mit einem sogenannten "Push-Through"-System zur hydraulischen Notbetätigung zu koppeln. Das hydraulische Notsystem weist einen Bremsdruckgeber 34 auf, der über das Bremspedal 30 mechanisch betätigt wird. Ein Elektromagnetventil 36 ist zwischen dem Bremsdruckgeber 34 und den Betätigungseinheiten 10 zumindest einer Achse des Fahrzeuges angeordnet. Im elektrisch unbetätigten Zustand stellt das Elektromagnetventil 36 eine Verbindung zwischen dem Bremsdruckgeber 34 und der Betätigungseinheit 10 her, so daß bei einem Ausfall der elektrischen Versorgungsspannung im Fahrzeug eine Bremsenbetätigung durch das hydraulische Notsystem möglich ist. Dagegen sperrt das Elektromagnetventil 36 die Verbindung zwischen dem Bremsdruckgeber 34 und den Betätigungseinheiten 10 bei Vorhandensein der elektrischen Versorgungsspannung im Fahrzeug und einem fehlerfreien elektrischen System, so daß die Bremsenbetätigung ausschließlich durch das elektrische System erfolgt.

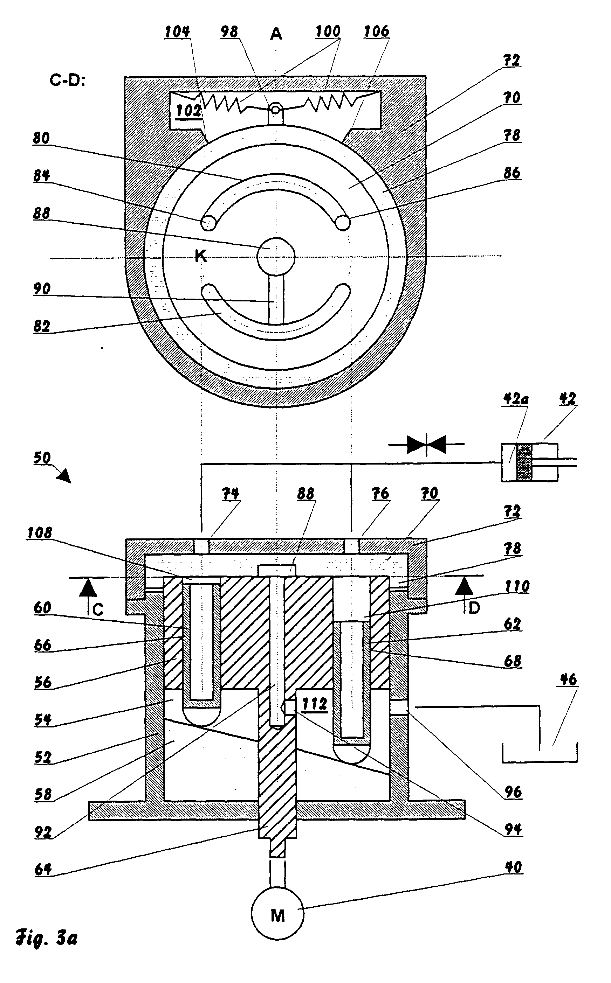

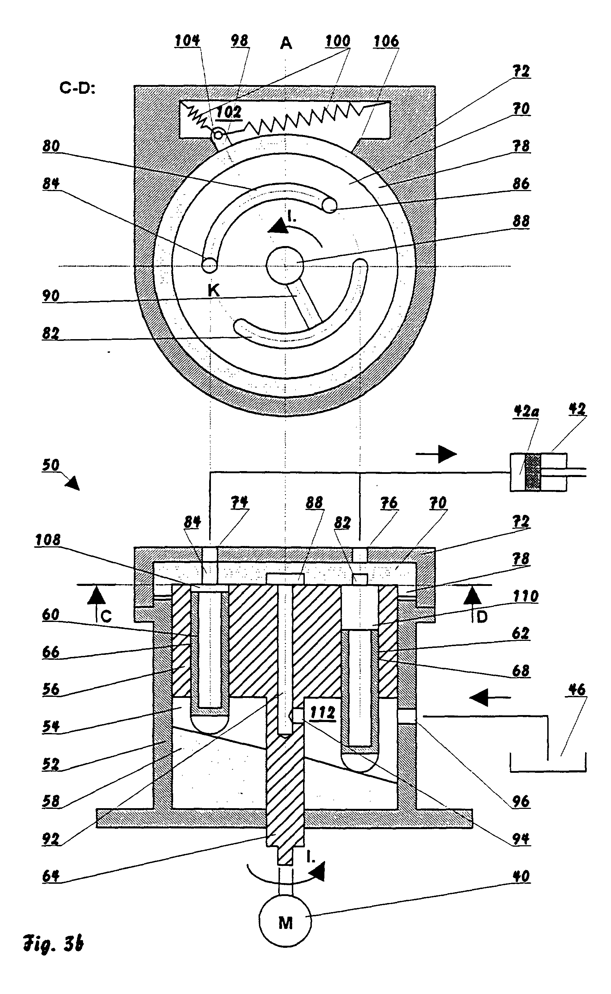

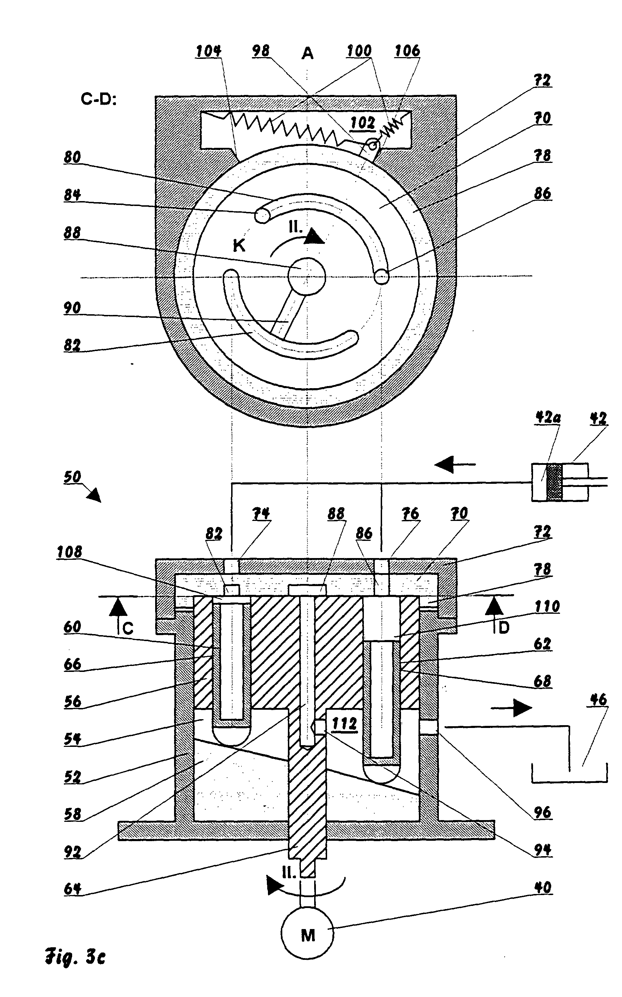

Aufbau und Funktionsweise einer besonders vorteilhaften Ausführungsform der Pumpe 50 werden anhand der Fig. 3a bis 3c erläutert. Im unteren Teil der Fig. 3a bis 3c ist die Pumpe 50 jeweils in einem Längsschnitt schematisch dargestellt, während im oberen Teil der Fig. 3a bis 3c jeweils der Schnitt entlang der Linie C-D dargestellt ist.

Wie Fig. 3a zeigt ist die Pumpe 50 als Axialkolbenpumpe ausgeführt. Die Axialkolbenpumpe ist im wesentlichen rotationssymetrisch in Bezug auf eine Achse A. Dazu weist ein Gehäuse 52 eine kreiszylinderförmige Bohrung 54 auf, in der eine Zylindertrommel 56 um die Achse A drehbar aufgenommen ist. In der Zylindertrommel 56 sind Durchgangsbohrungen 66, 68 parallel zu der Achse A auf einem Kreis K angeordnet, in denen zwei Kolben 60, 62 verschiebbar aufgenommen sind. Die Kolben 60, 62 stützen sich gegen eine Schrägscheibe 58 ab, die am Grund der kreiszylinderförmigen Bohrung 54 feststehend angeordnet ist. Die Zylindertrommel 56 ist (einstückig) mit einer Antriebswelle 64 verbunden, die die Schrägscheibe 58 und das Gehäuse 52 gleich zu der Achse A durchdringt. Die Antriebswelle 64 ist zur Betätigung der Axialkolbenpumpe mit einem Elektromotor 40 getrieblich gekoppelt.

Eine solche Axialkolbenpumpe wird auch als "Schrägscheibenmaschine" bezeichnet, da die Antriebswelle 64 und die Zylindertrommel 56 gleichachsig angeordnet sind, die Stütz(Schräg)-scheibe 58 feststehend und die Zylindertrommel 56 über die Antriebswelle 64 durch den Elektromotor 40 angetrieben ist. Dagegen werden Axialkolbenpumpen, bei denen die Zyindertrommel feststehend und die Stützscheibe angetrieben ist, als "Taumelscheibenmaschinen" bezeichnet.

Ein Deckel 72 ist fest mit dem Gehäuse 52 verbunden, um das Gehäuse 52 nach oben dichtend abzuschließen. Der Deckel 72 weist einen ersten und zweiten Anschluß 74, 76 auf, die jeweils als Durchgangsbohrung parallel zu der Achse A auf dem Kreis K ausgeführt sind. Die beiden Anschlüsse 74, 76 stehen mit der Druckkammer 42a einer Zylinder-/Kolbenanordnung 42 in Verbindung.

Zwischen der Zylindertrommel 56 und dem Deckel 72 ist eine Steuerscheibe 70 um die Achse A drehbar angeordnet. Zur Zentrierung in Bezug auf die Achse A weist die Steuerscheibe 70 eine umlaufende Kante 78 auf, die an dem Umfang der Zylindertrommel 56 radial geführt ist.

Von der Steuerscheibe 70 und den Kolben 60, 62 werden in den Bohrungen 66, 68 der Zylindertrommel 56 Druckräume 108, 110 begrenzt. Zur Vergrößerung des Volumens der Druckräume 108, 110 sind die Kolben 60, 62 jeweils als Hohlzylinder ausgeführt.

Die Steuerscheibe 70 weist auf der der Zylindertrommel 56 zugeordneten Stirnseite eine erste und zweite bogenförmige Nut 80, 82 auf, die jeweils auf dem Kreis K angeordnet sind. Eine erste und zweite Bohrung 84, 86 sind jeweils an den Enden der ersten bogenförmigen Nut 80 auf dem Kreis K angeordnet und durchdringen die Steuerscheibe 70. Weiterhin weist die Steuerscheibe 70 auf der der Zylindertrommel 56 zugeordneten Stirnseite eine zentral angeordnete kreiszylinderförmige Kammer 88 auf, die über eine weitere Nut 90 mit der zweiten bogenförmigen Nut 82 verbunden ist.

Die in der Steuerscheibe 70 zentral angeordnete kreiszylinderförmige Kammer 88 ist über eine in der Zylindertrommel 56 bzw. der Antriebswelle 64 angeordnete Zentralbohrung 92 sowie eine Radialbohrung 94 mit einem Innenraum 112 verbunden, der über einen in dem Gehäuse 52 angeordneten Anschluß 96 mit einem Bremsfluidbehälter 46 in Verbindung steht.

An der Steuerscheibe 70 ist ein radial nach außen gerichteter Mitnehmerstift 98 befestigt, der in eine Aussparung 102 des Deckels 72 ragt. Der Mitnehmerstift 98 ist mit einer Federanordnung 100 gekoppelt, die sich aus zwei gleichen, aber wirkungsmäßig entgegengerichteten Federelementen zusammensetzt, die sich in der Aussparung 102 an dem Deckel 72 ortsfest abstützen. Ist die Zylindertrommel 56 wie in Fig. 3a dargestellt nicht angetrieben, so werden von der oberen Stirnfläche der Zylindertrommel 56 auf die untere Stirnfläche der Steuerscheibe 70 und damit auch auf den Mitnehmerstift 98 keine Gleitreibungskräfte übertragen, so daß die Steuerscheibe 70 durch die Federanordnung 100 in der in Fig. 3a dargestellten Grundstellung gehalten wird.

In der in Fig. 3a darstellten Grundstellung der Steuerscheibe 70 werden der erste und zweite Anschluß 74, 76 abgesperrt, so daß ein in der Druckkammer 42a der Zylinder-/Kolbenanordnung 42 anstehendes Druckniveau konstant gehalten wird. Die Einstellung dieser sogenannten "Druckhaltephase" erfolgt somit durch einfache Ausschaltung des Elektromotors 40.

Die Einstellung einer sogenannten "Druckaufbauphase" ist in Fig. 3b dargestellt. Dazu wird die Zylindertrommel 56 durch den Elektromotor 40 in einer ersten Drehrichtung I. (hier in Gegenrichtung zum Uhrzeigersinn) angetrieben. Dabei werden von der oberen Stirnfläche der Zylindertrommel 56 auf die untere Stirnfläche der Steuerscheibe 70 und damit auch auf den Mitnehmerstift 98 Gleitreibungskräfte übertragen, die den von der Federanordnung 100 auf den Mitnehmerstift 98 ausgeübten Federkräften entgegengerichtet sind. Die Federanordnung 100 ist so bemessen, daß die bei Antrieb der Zylindertrommel 56 wirksamen Gleitreibungskräfte stets ausreichend sind, um die Steuerscheibe 70 entgegen der Federkraft der Federanordnung 100 soweit um die Achse A zu drehen, daß der Mitnehmerstift 98 an einem ersten Anschlag 104 zur Anlage kommt und die Steuerscheibe 70 die in Fig. 3b dargestellte Position einnimmt.

Die Anordnung der ersten und zweiten bogenförmigen Nut 80, 82 in der Steuerscheibe 70 ist so bemessen, daß bei der in Fig. 3b dargestellten Position der Steuerscheibe 70 die in der ersten bogenförmigen Nut 80 angeordnete erste Durchgangsbohrung 84 gleichachsig zu dem ersten Anschluß 74 liegt und der zweite Anschluß 76 gesperrt ist. Durch den Antrieb der Zylindertrommel 56 werden die beiden Kolben 60, 62 in zueinander gegenläufige Hubbewegungen versetzt. Während eine der Druckkammern 108, 110 mit der zweiten bogenförmigen Nut 82 in Verbindung steht, führt der zugehörige Kolben 60, 62 eine Abwärtsbewegung aus, um Bremsfluid aus dem Bremsfluidbehälter 46 anzusaugen. Der Ansaugweg erstreckt sich dabei über den Anschluß 96, den Innenraum 112, die Bohrungen 94 und 92, die Kammer 88, die Nut 90 sowie die zweite bogenförmige Nut 82. Nach dem Ansaugvorgang kommt die betreffende Druckkammer 108, 110 mit der ersten bogenförmigen Nut 80 in Verbindung, wobei der zugehörige Kolben 60, 62 eine Aufwärtsbewegung ausführt, um die Druckkammer 42a der Zylinder-/Kolbenanordnung 42 mit dem in die Druckkammer 108, 110 angesaugten Bremsfluid zu beaufschlagen, wobei der Förderweg über die erste bogenförmige Nut 80, die erste Durchgangsbohrung 84 sowie den ersten Anschluß 84 führt.

In Fig. 3c ist die Einstellung einer sogenannten "Druckabbauphase" dargestellt. Dazu wird die Zylindertrommel 56 durch den Elektromotor 40 in einer zweiten Drehrichtung II. (hier in Richtung des Uhrzeigersinn) angetrieben. Aufgrund der Gleitreibungskräfte, die zwischen den Anlageflächen der Zylindertrommel 56 und der Steuerscheibe 70 auftreten, kommt der Mitnehmerstift 98 zur Anlage an einem zweiten Anschlag 106, so daß die Steuerscheibe 70 die in Fig. 3c dargestellte Position einnimmt.

Bei der in Fig. 3c dargestellten Position der Steuerscheibe 70 liegt die in der ersten bogenförmigen Nut 80 angeordnete zweite Durchgangsbohrung 86 gleichachsig zu dem zweiten Anschluß 76 und der erste Anschluß 74 ist gesperrt. Während eine der beiden Druckkammern 108, 110 mit der ersten bogenförmigen Nut 80 in Verbindung steht, führt der zugehörige Kolben 60, 62 eine Abwärtsbewegung aus, um Bremsfluid aus der Druckkammer 42a der Zylinder-/Kolbenanordnung 42 anzusaugen. Der Ansaugweg erstreckt sich dabei über den zweiten Anschluß 76, die zweite Durchgangsbohrung 86 sowie die erste bogenförmige Nut 80. Nach dem Ansaugvorgang kommt die betreffende Druckkammer 108, 110 mit der zweiten bogenförmigen Nut 82 in Verbindung, wobei der zugehörige Kolben 60, 62 eine Aufwärtsbewegung ausführt, um das in die Druckkammer 108, 110 angesaugte Bremsfluid in den Bremsfluidbehälter 46 zurückzufördern. Die Rückförderung erfolgt dabei über die zweite bogenförmige Nut 82, die Nut 90, die Kammer 88, die Bohrungen 92 und 94, den Innenraum 112 sowie den Anschluß 96.

Bei der in Fig. 3a bis 3c dargestellten Ausführungsform einer Axialkolbenpumpe ist der Neigungswinkel der Schräg(Stütz)scheibe 58 gegenüber der Zylindertrommel 56 konstant. Durch Veränderung des Neigungswinkels ist die Fördermenge der Pumpe variierbar. Für den Fall, daß der Neigungswinkel gleich Null ist, also die Schräg(Stütz)scheibe 58 senkrecht zu der Achse A der Zylindertrommel 56 steht, wird kein Fluid gefördert, so daß auf diese Weise ebenfalls die Einstellung einer Druckhaltephase möglich ist. Somit kann anstelle der Steuerscheibe 70 auch eine über einen Verstellmechanismus in der Neigung verstellbare Schräg(Stütz)scheibe 58 eingesetzt werden, wobei der Verstellmechanismus bei ausgeschaltetem Elektromotor 40 die Schräg(Stütz)scheibe 58 senkrecht zu der Achse A der Zylindertrommel 56 stellt, um während der Druckhaltephasen elektrische Energie einzusparen.

Es ist auch möglich einen solchen Verstellmechanismus elektromagnetisch zu betätigen, was im übrigen auch auf die Steuerscheibe 70 anwendbar ist, deren Verstellung unter Ausnutzung von Gleitreibungskräften erfolgt. Eine solche elektromagnetische Betätigung ist dann mit der vorhandenen elektrischen Ansteuerung des Elektromotors 40 elektrisch zu koppeln, um den Aufwand für eine zusätzliche elektrische Ansteuerung einzusparen. So kann der dem Elektromotor 40 zugeführte Strom gleichzeitig auch die Spule einer solchen elektromagnetischen Betätigung bestromen. Die elektromagnetische Betätigung ist dann so auszulegen, daß im unbestromten Zustand, also bei nicht angetriebenem Elektromotor 40, die Druckhaltephase durch Geradestellung der Schräg(Stütz)scheibe 58 oder Positionierung der Steuerscheibe 70 gemäß Fig. 3a eingestellt wird. Da die Druckaufbau- und Druckabbauphasen in Abhängigkeit der Förderrichtung der Pumpe 50 eingestellt werden, die sich aus der Drehrichtung des Elektromotors 40 und damit aus der Stromrichtung ergibt, kann anhand der Stromrichtung die entsprechende Neigung der Schräg(Stütz)scheibe 58 oder Postionierung der Steuerscheibe 70 gemäß Fig. 3b oder 3c eingestellt werden.

## Patentansprüche

1. Bremsbetätigungseinheit (10) mit
- einer Zylinder/Kolbenanordnung (42), die auf wenigstens
- einen Bremsbelag (4a, 4b) wirkt, der mit einer Bremsscheibe (8) in Reibungseingriff bringbar ist,
- einer Hydraulikpumpe (50), die mit einer Druckkammer (42a) der Zylinder/Kolbenanordnung (42) hydraulisch verbindbar ist um den Zylinder (42b) der Zylinder/Kolbenanordnung (42) relativ zum Kolben (42c) der Zylinder/Kolbenanordnung zu bewegen, und
- einem die Hydraulikpumpe (50) antreibenden Motor (40),
dadurch gekennzeichnet, daß
die Hydraulikpumpe (50) eine Axialkolbenpumpe ist, die in eine Druckaufbau-, Druckhalte- und Druckabbaustellung bringbar ist.

2. Bremsbetätigungseinheit (10) nach Anspruch 1,
dadurch gekennzeichnet, daß
die Hydraulikpumpe (50) dazu eingerichtet ist, in entgegengesetzte Richtungen Hydraulikfluid zu fördern.

3. Bremsbetätigungseinheit (10) nach Anspruch 1 oder 2,
dadurch gekennzeichnet, daß
die Hydraulikpumpe (50) selbsthemmend ausgebildet ist.

4. Bremsbetätigungseinheit (10) nach einem der Ansprüche 1 bis 3,
dadurch gekennzeichnet, daß die Hydraulikpumpe (50) eine im Druckbereich von etwa 0 bar bis etwa 1 bar fein dosierbare Förderleistung hat.

5. Bremsbetätigungseinheit (10) nach einem der Ansprüche 1 bis 4,
dadurch gekennzeichnet, daß
der Motor ein Elektromotor (40) mit umkehrbarer Laufrichtung ist.

6. Bremsbetätigungseinheit (10) nach einem der vorhergehenden Ansprüche,
dadurch gekennzeichnet, daß
die Axialkolbenpumpe (50) eine Schrägscheibenmaschine ist, bei der eine Stützscheibe (58) feststehend und eine Zylindertrommel (56) mit wenigstens einein darin axial gleitverschieblich aufgenommenen Kolben (60, 62) drehbar angeordnet ist, wobei der Kolben (60, 62) eine durch die Stützscheibe (58) zwangsgesteuerte Hubbewegung ausführt, wenn sich die Zylindertrommel (56) dreht.

7. Bremsbetätigungseinheit (10) nach einem der vorhergehenden Ansprüche,
dadurch gekennzeichnet, daß
die Axialkolbenpumpe (50) eine feststehende Zylindertrommel mit darin axial gleitverschieblichen Kolben und eine dazu quer angeordnete drehantreibbare Stützscheibe aufweist.

8. Bremsbetätigungseinheit nach einem der vorhergehenden Ansprüche,
dadurch gekennzeichnet, daß
der Kolben (42c) gegenüber dem Zylinder (42b) der Zylinder/ Kolbenanordnung (42) durch eine Dichtung (6a) abgedichtet ist, wobei die Dichtung (6a) dazu eingerichtet ist, eine Rückstellkraft auf den Kolben auszuüben, um ein Schleifen der Bremsblökke (4a, 4b) an der Bremsscheibe (8) bei unbetätigter Bremsbetätigungseinheit (10) zu vermeiden.

9. Bremsbetätigungseinheit (10) nach einem der vorhergehenden Ansprüche,
dadurch gekennzeichnet, daß
die Hydraulikpumpe koaxial zu der Zylinder/Kolbenanordnung (42) angeordnet ist und vorzugsweise zumindest teilweise in dem Kolben (42c) aufgenommen ist.

10. Bremsbetätigungseinheit (10) nach Anspruch 1,
dadurch gekennzeichnet, daß
der Motor (40) an einem Gehäuse (42d) der Zylinder/Kolbenanordnung (42) angeordnet ist und von einem Hydraulikfluidbehälter (46) zumindest teilweise radial umgeben ist.

11. Bremsbetätigungseinheit (10) nach dem vorhergehenden Anspruch,
dadurch gekennzeichnet, daß
die Hydraulikpumpe (50) mit dem Kolben (42c) nur durch Hydraulikfluid mechanisch gekoppelt ist.

12. Bremsbetätigungseinheit (10) nach Anspruch 1,
dadurch gekennzeichnet, daß zu der Hydraulikpumpe (50) ein Druckbegrenzungsventil (44) parallel geschaltet ist, um bei Überschreiten eines vorherbestimmten Druckes an dem Kolben (42c) der Zylinder/Kolbenanordnung (42) Hydraulikfluid in einen Hydraulikfluidbehälter (46) abzuleiten.

13. Bremsbetätigungseinheit (10) nach Anspruch 1,
dadurch gekennzeichnet, daß
die Hydraulikpumpe (50) nicht selbsthemmend ausgebildet ist und ein steuerbares Ventil zwischen der Druckkammer (42a) und der Hydraulikpumpe (50) angeordnet ist, um den Hydraulikdruck in der Druckkammer (42a) bei stillstehender Hydraulikpumpe (50) konstant zu halten.

14. Bremsbetätigungseinheit (10) nach Anspruch 1,
dadurch gekennzeichnet, daß
die Druckkammer (42a) mit einem Hydraulikanschluß (10a) versehen ist, der über eine Hydraulikleitung mit einem durch ein Bremspedal (30) betätigbaren Hauptbremszylinder verbindbar ist.

15. Bremsbetätigungseinheit (10) nach Anspruch 6,
dadurch gekennzeichnet, daß
mit der Zylindertrommel (56) ein Steuerelement (70) in Gleitreibungseingriff steht, das in einer Ruhestellung der Hydraulikpumpe (50) eine Verbindung zwischen der Druckkammer (42a) der Zylinderkolbenanordnung (42) und der Hydraulikpumpe (50) sperrt und in betätigten Zuständen der Hydraulikpumpe eine Verbindung zwischen der Druckkammer (42a) der Zylinderkolbenanordnung (42) und der Hydraulikpumpe (50) herstellt.

16. Bremsbetätigungseinheit (10) nach dem vorhergehenden Anspruch,
dadurch gekennzeichnet, daß
das Steuerelement (70) scheibenförmig ist und auf einer von der Zylindertrommel (56) abgewandten Oberfläche eine Vertiefung (82) aufweist, die mit einem Hydraulikfluidpfad in Verbindung bringbar ist, der zu der Druckkammer (42a) der Zylinder/Kolbenanordnung (42) führt, und die mit einer drucklosen Seite der Hydraulikpumpe (50) in Verbindung steht.

17. Bremsbetätigungseinheit (10) nach den beiden vorhergehenden Ansprüchen,
dadurch gekennzeichnet, daß
das Steuerelement (70) auf seiner der Zylindertrommel (56) zugewandten Oberfläche eine Vertiefung (80) aufweist, die mit einem Hydraulikpfad in Fluidverbindung bringbar ist, der mit der Druckkammer (42a) der Zylinder/Kolbenanordnung (42) in Verbindung steht, und die mit einer Druckseite der Hydraulikpumpe (50) in Verbindung bringbar ist.

18. Bremsbetätigungseinheit (10) nach den drei vorhergehenden Ansprüchen,
dadurch gekennzeichnet, daß
das Steuerelement (70) über eine Federanordnung (98, 100) gegen von der Zylindertrommel (56) ausgeübte Gleitreibungskräfte in beiden Drehrichtungen vorgespannt ist und vorzugsweise eine
durch wenigstens einen Anschlag (104, 106) begrenzte maximale Drehbewegung ausführen kann.

19. Bremsbetätigungseinheit (10) nach Anspruch 6,
dadurch gekennzeichnet, daß
die Stützscheibe (52) zur Rotationsachse (A) der Zylindertrommel (56) neigbar angeordnet ist, wobei der Neigungswinkel der Stützscheibe (52) veränderbar und die Stützscheibe (52) unter dem jeweiligen Neigungswinkel arretierbar ist.

20. Bremsbetätigungseinheit nach Anspruch 6,
dadurch gekennzeichnet, daß
die Stützscheibe (52) durch eine elektromagnetische Betätigungseinheit (3) in ihrer Neigung und Stellung veränderbar ist, wobei die Ansteuerung der elektromagnetischen Betätigungseinheit mit der Ansteuerung des Elektromotors (40) der Pumpe gekoppelt ist.

## Claims

1. A brake actuation unit (10) comprising
- a cylinder/piston arrangement (42) which acts on at least
- one brake lining (4a, 4b) that is adapted to be brought into frictional engagement with a brake disk (8),
- a hydraulic pump (50) which is hydraulically connectable with a pressure chamber (42a) of the cylinder/piston arrangement (42) in order to move the cylinder (42b) of the cylinder/piston arrangement (42) relative to the piston (42c) of the cylinder/piston arrangement, and
- a motor (40) for driving the hydraulic pump (50),
characterised in that
- the hydraulic pump (50) is an axial piston pump which can be brought into a pressure build-up, a pressure holding and a pressure relief position.

2. A brake actuation unit (10) according to Claim 1,
characterised in that
the hydraulic pump (50) is adapted to deliver hydraulic fluid in opposite directions.

3. A brake actuation unit (10) according to Claim 1 or 2,
characterised in that
the hydraulic pump (50) is designed to be self-locking.

4. A brake actuation unit (10) according to one of Claims 1 to 3,
characterised in that
the hydraulic pump (50) has a delivery capacity which can be precisely controlled in a pressure range from approx. 0 bar to approx. 1 bar.

5. A brake actuation unit (10) according to one of Claims 1 to 4,
characterised in that
the motor is an electric motor (40) with reversible running direction.

6. A brake actuation unit (10) according to one of the previous claims,
characterised in that
the axial piston pump (50) is an inclined disk machine where a supporting disk (58) is stationary and a cylinder drum (56) with at least one piston (60, 62) which is slidably accommodated therein is arranged so as to be rotatable, with the piston (60, 62) performing a reciprocating movement which is positively controlled by the supporting disk (58) when the cylinder drum (56) rotates.

7. A brake actuation unit (10) according to one of the previous claims,
characterised in that
the axial piston pump (50) comprises a stationary cylinder drum with a piston axially slidable therein and a supporting disk which is arranged transversely to it and adapted to be rotated.

8. A brake actuation unit (10) according to one of the previous claims,
characterised in that
the piston (42c) is sealed against the cylinder (42b) of the cylinder/piston arrangement (42) by means of a seal (6a), with the seal (6a) being adapted to exert a resetting force onto the piston in order to avoid sliding of the brake blocks (4a, 4b) against the brake disk (8) in the non-actuated condition of the brake actuation unit (10).

9. A brake actuation unit (10) according to one of the previous claims,
characterised in that
the hydraulic pump is arranged coaxially to the cylinder/ piston arrangement (42) and preferably accommodated at least partially in the piston (42c).

10. A brake actuation unit (10) according to Claim 1,
characterised in that
the motor (40) is arranged at a housing (42d) of the cylinder/piston arrangement (42) and is at least partially radially surrounded by a hydraulic fluid reservoir (46).

11. A brake actuation unit (10) according to the previous claim,
characterised in that
the hydraulic pump (50) and the piston (42c) are mechanically coupled by hydraulic fluid only.

12. A brake actuation unit (10) according to Claim 1,
characterised in that
a pressure limiting valve (44) is connected in parallel with the hydraulic pump (50) in order to drain hydraulic fluid into a hydraulic fluid reservoir (46) upon exceeding a predetermined pressure acting on the piston (42c) of the cylinder/piston arrangement (42).

13. A brake actuation unit (10) according to Claim 1,
characterised in that
the hydraulic pump (50) is designed not self-locking and a controllable valve is arranged between the pressure chamber (42a) and the hydraulic pump (50) in order to maintain the hydraulic pressure in the pressure chamber (42a) constant when the hydraulic pump (50) is deactivated.

14. A brake actuation unit (10) according to Claim 1,
characterised in that
the pressure chamber (42a) is provided with a hydraulic connection (10a) which can be connected via a hydraulic line with a master cylinder adapted to be activated via a brake pedal (30).

15. A brake actuation unit (10) according to Claim 6,
characterised in that
the cylinder drum (56) is in sliding frictional engagement with a control element (70) which, in a rest position of the hydraulic pump (50), closes a connection between the pressure chamber (42a) of the cylinder/piston arrangement (42) and the hydraulic pump (50) and, in activated conditions of the hydraulic pump, establishes a connection between the pressure chamber (42a) of the cylinder/piston arrangement (42) and the hydraulic pump (50).

16. A brake actuation unit (10) according to the previous claim,
characterised in that
the control element (70) is disk-shaped and comprises a recess (82) in a surface facing away from the cylinder drum (56), which recess can be brought in connection with a hydraulic fluid path leading to the pressure chamber (42a) of the cylinder/piston arrangement (42), and which communicates with a pressureless side of the hydraulic pump (50).

17. A brake actuation unit (10) according to the two previous claims,
characterised in that
the control element (70) comprises a recess (80) in a surface facing toward the cylinder drum (56), which recess can be brought in fluid connection with a hydraulic fluid path communicating with the pressure chamber (42a) of the cylinder/piston arrangement (42), and which can be connected with a pressure side of the hydraulic pump (50).

18. A brake actuation unit (10) according to the three previous claims,
characterised in that
the control element (70) is biased via a spring arrangement (98, 100) in both directions of rotation against sliding frictional forces exerted by the cylinder drum (56) and preferably can perform a maximum rotational movement that is limited by at least one stop (104, 106).

19. A brake actuation unit (10) according to Claim 6,
characterised in that
the supporting disk (52) is arranged so that it can be inclined relative to the axis of rotation (A) of the cylinder drum (56), with the inclination angle of the supporting disk (52) being variable and the supporting disk (52) being lockable at the respective inclination angle.

20. A brake actuation unit (10) according to Claim 6,
characterised in that
the supporting disk (52) can be varied in its inclination and position by means of an electromagnetic actuation means (3), with the control of the electromagnetic actuation means being coupled with the control of the electric motor (40) of the pump.

## Revendications

1. Unité d'actionnement de frein (10) comprenant
- un dispositif à cylindre et piston (42) qui agit sur au moins
- une garniture de frein (4a, 4b) qui peut être amenée en contact frottant avec un disque de frein (8),
- une pompe hydraulique (50) qui peut être mise en communication hydraulique avec une chambre de pression (42a) du dispositif à cylindre et piston (42) pour déplacer le cylindre (42b) du dispositif à cylindre et piston (42) pat rapport au piston (42c) du dispositif à cylindre et piston, et
- un moteur (40) entraînant la pompe hydraulique (50),
caractérisée en ce que
la pompe hydraulique (50) est une pompe à piston axial qui peut être amenée dans une position de montée de pression de maintien de pression et de baisse de pression.

2. Unité d'actionnement da freil (10) selon la revendication 1,
caractérisée en ce que
la pompe hydraulique (50) est conçue pour refouler du fluide hydraulique dans des directions opposées.

3. Unité d'actionnement de frein (10) selon la revendication 1 ou 2,
caractérisée en ce que
la pompe hydraulique (50) est à blocage automatique.

4. Unité d'actionnement de frein (10) selon l'une quelconque des revendications 1 à 3,
caractérisée en ce que
la pompe hydraulique (50) a une capacité de refoulement finement réglable d'environ 0 bar à environ 1 bar.

5. Unité d'actionnement de frein (10) selon l'une quelconque des revendications 1 à 4,
caractérisée en ce que
le moteur est un moteur électrique (40) à sens de marche inversible.

6. Unité d'actionnement de frein (10) selon l'une quelconque des revendications précédentes,
caractérisée en ce que
la pompe à piston axial (50) est une machine à plateau oscillant dans laquelle un disque d'appui (58) est monté fixe et un tambour cylindrique (56), dans lequel est logé au moins un piston (60, 62) pouvant coulisser axialement à l'intérieur de celui-ci, est monté tournant, le piston (60, 62) effectuant un mouvement de levée commandé de Façon forcée par le disque d'appui (58) lorsque le tambour cylindrique (56) tourne.

7. Unité d'actionnement de frein (10) selon l'une quelconque des revendications précédentes,
caractérisée en ce que
la pompe à piston axial (50) présente un tambour cylindrique fixe avec piston pouvant coulisser axialement à l'intérieur de celui-ci et, disposé transversalement à cela, un disque d'appui pouvant être entraîné en rotation.

8. Unité d'actionnement de frein selon l'une quelconque des revendications précédentes,
caractérisée en ce que
une étanchéité est réalisée entre le piston (42c) et Le cylindre (42b) du dispositif à cylindre et piston (42) par une garniture d'étanchéité (6a), la garniture d'étanchéité (6a) étant conçue de façon à exercer une force de rappel sur le piston pour éviter une usure des blocs de frein (4a, 4b) contre le disque de frein (8) lorsque l'unité d'actionnement de frein (10) n'est pas actionnée.

9. Unité d'actionnement de frein (10) selon l'une quelconque des revendications précédentes,
caractérisée en ce que
la pompe hydraulique est disposée coaxialement au dispositif à cylindre et piston (42) et est logée au moins partiellement dans le piston (42c).

10. Unité d'actionnement de frein (10) selon la revendication 1,
caractérisée en ce que
le moteur (40) est disposé sur un boîtier (42d) du dispositif à cylindre et piston (42) et est entouré au moins partiellement radialement par un réservoir de fluide hydraulique (46).

11. Unité d'actionnement de frein (10) selon la revendication précédente,
caractérisée en ce que
la pompe hydraulique (50) n'est accouplée mécaniquement que par l'intermédiaire de fluide hydraulique avec le piston (42c).

12. Unité d'actionnement de frein (10) selon la revendication 1,
caractérisée en ce que
un limiteur de pression (44) est monté en parallèle avec la pompe hydraulique (50) pour évacuer du fluide hydraulique dans un réservoir de fluide hydraulique (46) lorsqu'une pression prédéterminée est dépassée sur le piston (42c) du dispositif à piston et cylindre (42).

13. Unité d'actionnement de frein (10) selon la revendication 1,
caractérisée en ce que
la pompe hydraulique (50) n'est pas à blocage automatique et une vanne asservie est disposée entre la chambre de pression (42a) et la pompe hydraulique (50) pour maintenir constante la pression hydraulique dans la chambre de pression (42a) lorsque la pompe hydraulique (50) est arrêtée.

14. Unité d'actionnement de frein (10) selon la revendication 1,
caractérisée en ce que
la chambre de pression (42a) est pourvue d'un raccord hydraulique (10a) qui peut être relié par l'intermédiaire d'une conduite hydraulique à un maître cylindre de frein pouvant être actionné par une pédale de frein (30).

15. Unité d'actionnement de frein (10) selon la revendication 6,
caractérisée en ce que
un élément de commande (70) est en contact glissant à frottement avec le tambour cylindrique (56), qui ferme dans une position de repos de la pompe hydraulique (50) une communication entre la chambre de pression (42a) du dispositif à cylindre et piston (42) et la pompe hydraulique (50) et dans des états actionnés de la pompe hydraulique une communication entre la chambre de pression (42a) du dispositif à cylindre et piston (42) et la pompe hydraulique (50).

16. Unité d'actionnement de frein (10) selon la revendication précédente,
caractérisée en ce que
l'élément de commande (70) est en forme de disque et présente sur une surface opposée au tambour cylindrique (56) un creux (82) qui peut être mis en communication avec un trajet de fluide hydraulique qui mène à la chambre de pression. (42a) du dispositif à cylindre et piston (42) et qui est en communication avec un côté sans pression de la pompe hydraulique (50).

17. Unité d'actionnement de frein (10) selon les deux revendications précédentes,
caractérisée en ce que
l'élément de commande (70) présente sur sa surface tournée vers le tambour cylindrique (56) un creux (80) qui peut être. mis en communication avec un trajet de fluide hydraulique qui est en communication avec la chambre de pression (42a) du dispositif à cylindre et piston (42) et qui peut être mis en communication avec un côté de pression de la pompe hydraulique (50).

18. Unité d'actionnement de frein (10) selon les trois revendications précédentes,
caractérisée en ce que
l'élément de commande (70) est poussé en permanence dans les deux sens de rotation par l'intermédiaire d'un dispositif élastique (98, 100) à l'encontre de forces de frottement de glissement exercées par le tambour cylindrique (56) et peut effectuer un mouvement de rotation maximum limité par au moins un arrêt (104, 106).

19. Unité d'actionnement de frein (10) selon la revendication 6,
caractérisée en ce que
le disque d'appui (52) est monté inclinable par rapport à l'axe de rotation (A) du tambour cylindrique (56), L'angle d'inclinaison du disque d'appui (52) pouvant être modifié et le disque d'appui (52) pouvant être immobilisé sous l'angle d'inclinaison respectif.

20. Unité d'actionnement de frein selon la revendication 6,
caractérisée en ce que
l'inclinaison et la position du disque d'appui (52) peut être modifiée par une unité d'actionnement électromagnétique (3), la commande de l'unité d'actionnement électromagnétique étant couplée avec la commande du moteur électrique (40) de la pompe.
